# EUROPÄISCHE PATENTSCHRIFT

(11) **EP 0 593 894 B1**
(45) Veröffentlichungstag und Bekanntmachung des Hinweises auf die Patenterteilung: **07.05.1997**
(21) Anmeldenummer: 93114655.9
(22) Anmeldetag: 13.09.1993
(51) Int. Cl.: B23K 26/08, B23K 26/02, B23P 23/00, B21D 28/22

(54) **Werkzeug für eine Stanzpresse mit einer Laser-Schweissanlage**
Tool for a punch press equipped with a laser welding apparatus
Outil pour poinçonneuse muni d'une installation de soudage au laser

(30) Priorität: 23.10.1992 CH 3300/92
(43) Veröffentlichungstag der Anmeldung: 27.04.1994
(73) Patentinhaber: BRUDERER AG, CH-9320 Frasnacht (CH)
(72) Erfinder: Summerauer, Ingomar J.K., CH-9320 Arbon (CH); Hellwig, Waldemar, Dr.-Ing., CH-9320 Arbon (CH)
(74) Vertreter: Blum, Rudolf Emil Ernst

(56) Entgegenhaltungen:
- EP-A- 0 343 661
- US-A- 5 008 510

## Beschreibung

Die Erfindung betrifft ein Werkzeug für eine mit mindestens einer Laser-Schweissanlage bestückte Stanzpresse, welche Laser-Schweissanlage mindestens einen Tragblock zum geführten Tragen einer Fokussiereinrichtung der Laser-Schweissanlage mit einer vorgegebenen Brennweite und einem vorgegebenen Fokussierpunkt enthält, welches Werkzeug einen Werkzeugkörper mit einer Arbeitsfläche aufweist, bei welcher mindestens eine Ausnehmung für eine darin eingesetzte Matrize angeordnet ist, deren Schnittkante mit einem Flächenabschnitt auf der Arbeitsfläche des Werkzeugkörpers fluchtet, welcher Tragblock derart ausgebildet und angeordnet ist, dass ein jeweiliger aus der im Tragblock eingesetzten Fokussiereinrichtung austretender Laserstrahl gegen eine festgelegte Stelle bei der Matrize fokussiert ist, um bei einem dort vorhandenen Werkstück Schweissungen durchzuführen, und welcher Tragblock mindestens eine Führungsfläche für dessen Positionierung relativ zur Fokussierstelle aufweist.

Stanzpressen, bei denen die Arbeitsvorgänge auch ein Schweissen mittels einer Laser-Schweissanlage umfassen, werden beispielsweise bei der Herstellung von Blechpaketen für elektrotechnische Erzeugnisse verwendet. Als Beispiel können Blechformteilen für Statoren und Rotoren von Elektromotoren genannt werden. Dazu werden die Bleche einzeln ausgestanzt und gestapelt, wobei das Stapeln beispielsweise erreicht wird, indem in oder unterhalb einer mit einem Stempel zusammenwirkenden Matrize eine sogenannte Bremsanordnung vorhanden ist. Bei Stapeln der aufeinanderfolgend ausgestanzten Bleche wird jedes neu auf den Stapel abgesetzte Blech bei mindestens einer Stelle mit dem darunter vorhandenen Blech, z.B. durch einen Laserstrahl, im Arbeitstakt der Stanzpresse verschweisst, bis das Blechpaket aus einer vorgegebenen Anzahl Einzelbleche gebildet ist. Darauf wird während einem Arbeits(Stanz-)Takt keine Schweissung vorgenommen, so dass schliesslich das fertiggestellte Blechpaket durch die weiteren ausgestanzten Bleche aus der Bremsanordnung hinausgedrückt wird.

Die Matrizen sind allgemein büchsenförmige Erzeugnisse aus Hartmetall, die in einer entsprechenden Oeffnung im Unterwerkzeug der Stanzpresse eingesetzt sind, und insbesondere eine mit der Arbeitsfläche des Werkzeuges fluchtende Schnittkante aufweisen.

Diese Schnittkante wird im Betrieb, wie allgemein bekannt ist, abgenützt und dabei werden die Werkzeuge, d.h. ihre Arbeitsflächen periodisch nachgeschliffen, um die ursprüngliche Schärfe der Schnittkante(n) wieder herzustellen.

Die ausgestanzten Bleche sind sehr dünn und aus diesem Grunde und auch aus schweisstechnischen Gründen müssen die jeweiligen Schweissstellen der Laserstrahl-Schweissung auf wenige 1/100 mm genau eingestellt sein. Diese Forderung bedingt offensichtlich ein entsprechend genau eingestelltes Montieren der Fokussieroptik der Laser-Schweissanlage, deren Brennweite und Fokussierpunkt die jeweilige Schweissstelle bestimmen. Diese Fokussieroptik, d.h. Fokussiereinrichtung ist üblicherweise mit einem Rahmenteil, auch irgendwo mit einem Werkzeug der Stanzpresse verbunden und wird, wie alle Schneidwerkzeuge der Stanzpresse erstmalig genau eingestellt.

Wird nun das Werkzeug ausgebaut, um aus dem oben erwähnten Grund die Arbeitsfläche nachzuschleifen, müssen nach dem Einbauen derselben sämtliche Fokussiereinrichtungen neu eingestellt werden, da durch das Abschleifen sich der Ort der Schweissstellen relativ zum früheren Fokussierpunkt der Fokussiereinrichtung verschoben hat. Dieses erneute Einstellen der Fokussiereinrichtungen ist eine mühselige, zeitraubende Arbeit.

In der EP-A-343 661 ist ein Werkzeug für eine Stanzpresse mit einer Laser-Schweissanlage offenbart, deren Fokussiereinrichtung in einem Träger gehalten ist, welcher mit einer vertikalen Seite des Unterwerkzeuges starr verbunden ist. Die Fokussiereinrichtung ist dabei in einem Verstellglied des Trägers gehalten. Wird die Arbeitsfläche des Unterwerkzeuges abgeschliffen, muss der Fokussierpunkt der Fokussiervorrichtung durch entsprechende Neueinstellung des Verstellgliedes wieder neu auf die sich an einem neuen Ort befindliche Schweissstelle beim Unterwerkzeug eingestellt werden.

Hier will die Erfindung Abhilfe schaffen. Die Erfindung, wie sie in den Ansprüchen gekennzeichnet ist, löst die Aufgabe, im Werkzeug für eine Stanzpresse mit einer Laser-Schweissanlage zu schaffen, bei welchem der jeweilige Tragblock für eine Fokussiereinrichtung der Laser-Schweissanlage mit einer Führungsfläche auf einer Positionierfläche eines Traggliedes liegt, die mit der Arbeitsfläche des Werkzeugkörpers fluchtet, in welcher die Matrize eingesetzt ist, deren Schnittkante mit der Arbeitsfläche fluchtet.

Die durch die Erfindung erreichten Vorteile sind im wesentlichen darin zu sehen, dass bei einem Abschleifen der Arbeitsfläche des Werkzeugkörpers um Schnittkanten nachzuschärfen die Positionierfläche des Traggliedes, die mit der Arbeitsfläche des Werkzeuges fluchtet ebenfalls abgeschliffen wird. Damit verbleibt die Höhenstellung des Tragblockes für die Fokussiereinrichtung auch nach dem Abschleifen unverändert relativ zur Schweissstelle und dem Fokussierpunkt des Laserstrahlenbündels, weil die Schnittkante der Matrize und die Positionierfläche des Traggliedes gemeinsam, also um dasselbe Mass abgeschliffen wurden. Damit sind nach erfolgtem Nachschärfen der Schnittkante der Matrize ein erneutes mühseliges Einstellen der Tragblockes, d.h. der Fokussiereinrichtung und dazu gehörige Probeläufe der Stanzpresse nicht mehr notwendig.

Im folgenden wird die Erfindung anhand von mehreren Ausführungswegen darstellenden Zeichnungen näher erläutert.
Fig. 1 zeigt rein schematisch eine mit einer Laser-Schweissanlage bestückte Stanzpresse,
Fig. 2 zeigt eine Seitenansicht, teilweise im Schnitt gezeichnet eines Teils eines Werkzeugkörpers mit einer in einem Tragblock gehaltenen Fokussiereinrichtung,
Fig. 3 zeigt eine Aufsicht auf einen Teil eines mit drei Fokussiereinrichtungen bestückten Werkzeugkörpers,
Fig. 4 und 5 zeigen eine Seitenansicht eines und einen Schnitt durch ein Kontrollgerät für eine Fokussiereinrichtung,
Fig. 6 und 7 zeigen Ausführungen, bei denen der Tragblock auf einem separaten, mit dem Unterwerkzeug verbundenen Tragteil angeordnet ist,
Fig. 8 zeigt eine der Fig. 2 entsprechende Darstellung einer Ausführung mit Absaugkanälen für Schweissdämpfe,
Fig. 9 zeigt eine Einzelheit der Ausführung nach Fig. 8,
Fig. 10 zeigt eine Aufsicht auf die in der Fig. 8 gezeigte Ausführung,
Fig. 11 zeigt eine Seitenansicht einer Ausführung mit einem einzigen Absaugkanal,
Fig. 12 zeigt eine Aufsicht auf die Ausführung nach Fig. 11,
Fig. 13 zeigt eine Ansicht von vorne auf die Ausführung nach Fig. 11, und
Fig. 14 zeigt die Querschnittsformen der zwei Abschnitte des Absaugkanals nach Fig. 11.

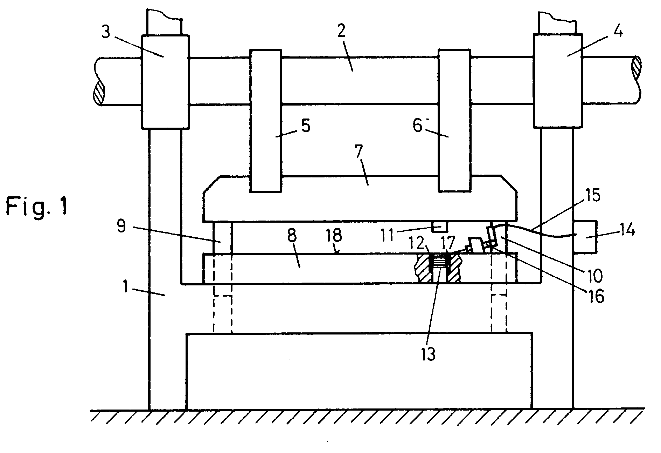

Fig. 1 zeigt rein schematisch eine Stanzpresse, die mit einer Laser-Schweissanlage ausgerüstet ist. Die Stanzpresse weist einen Rahmen 1 auf, in welchem eine Exzenter- oder Kurbelwelle 2 in Lagern 3, 4 drehbar gelagert ist. Diese Exzenterwelle 2 ist in bekannter Weise von einem nicht gezeichneten Antriebsmotor beispielsweise über einem Riementrieb getrieben. Auf der Exzenterwelle 2 sind in der gezeichneten Ausführung zwei Pleuelstangen 5, 6 gelagert, die beim unteren Ende mit einem sogenannten Stössel 7, der ein Oberwerkzeug trägt, gelenkig verbunden sind. Der Rahmen 1 trägt, weiterhin, ein sogenanntes Unterwerkzeug 8. Vom Stössel 7 ragen Führungssäulen 9, 10 nach unten, mittels welchen der Stössel 7 vertikal beweglich geführt ist.

Im erwähnten Oberwerkzeug ist ein beispielsweise gezeichneter Stempel 11 eingesetzt, der mit einer im Unterwerkzeug 8 vorhandenen Matrize 12 zusammenwirkt, um aus einem (nicht gezeichneten) Blechband, das in der Fig. 1 von links nach rechts vorgeschoben wird, aufeinanderfolgend, z.B. Rotorbleche auszustanzen, welche im Unterwerkzeug 8 zu jeweiligen Blechpakten 13 vereinigt werden. Dabei bilden Stempel 11 und Matrize 12 das letzte Werkzeugpaar der Bearbeitungsfolge des Blechstreifens, der beim Durchlaufen zwischen Oberwerkzeug und Unterwerkzeug 8 nach vorformenden Operationen zur Herstellung des schlussendlich aus dem Blechstreifen ausgestanzten Erzeugnisses ausgesetzt wird, wie dies dem Fachmann bekannt ist.

Mit dem Rahmen 1 ist eine Laserstrahlquelle 14 verbunden, die über optische Leiter 15 (nur einer dargestellt), z.B. Glasfaserkabel mit einer Fokussiereinrichtung 16 in Verbindung steht, die auf dem Unterwerkzeug 8 angeordnet ist.

Der Vollständigkeit halber soll noch erwähnt werden, dass in der Matrize 12 eine Bremsanordnung 17 vorhanden ist. Diese wirkt z.B. durch Reibung auf die ausgestanzten Bleche in der Matrize 12, um die Bleche durch Reibung zu halten, welche Bleche (bzw. das jeweilige Blechpaket) durch jedes nachfolgend ausgestanzte Blech schrittweise weiter nach unten gedrückt werden, bis sie die Bremsanordnung 17 verlassen und danach unter Einwirkung der Schwerkraft aus dem Unterwerkzeug 8 hinausgleiten.

Im Betrieb rotiert die Exzenterwelle 2 und bewirkt über die Pleuelstangen 5, 6 die Stanzbewegung des Stössels 7 mit dem Oberwerkzeug zur Herstellung der einzelnen Bleche, die beim letzten Arbeitsschritt in der Matrize 12 verbleiben. Es wird also in der Matrize 12 bei jedem Arbeitshub des Stössels 7 ein Blech auf ein sich dort schon befindliches Blech abgelegt. Sobald sich der Stempel 11 beim Aufwärtshub eine kleine Strecke von der Matrize 13 entfernt hat, wird durch die Laser-Schweissanlage 14, 15, 16 ein Laserstrahl von äusserst kurzer Dauer gegen eine Berührungsstelle zwischen dem abgelegten Blech und dem sich darunter befindlichen Blech abgegeben, um die zwei Bleche miteinander zu verschweissen. Die Arbeitstakte der Laser-Schweissanlage sind offensichtlich abhängig von der Stellung des Stempels 12 relativ zur Matrize, oder allgemein zur Drehstellung der Exzenterwelle 2 gesteuert. Nachdem eine vorgegebene Anzahl (z.B. 20) einzelner Bleche miteinander verschweisst worden sind, erfolgt gesteuert während einem Arbeitstakt des Stanzens keine Schweissung, so dass die Herstellung eines Blechpaketes abgeschlossen ist und die Herstellung des nächstfolgenden beginnen kann. Das fertiggestellte Blechpaket wird dann durch die weiter darauf abgelegten und wiederum verschweissten Bleche schlussendlich aus der Bremsanordnung hinausgeschoben.

Es ist nun eingangs erklärt worden, dass sich die Schnittkante der Matrize 12 (und offensichtlich auch des Stempels 11) abnützt, so dass die Arbeitsfläche 18 periodisch abgeschliffen werden muss, um die Schnittkante der Matrize 12 nachzuschärfen.

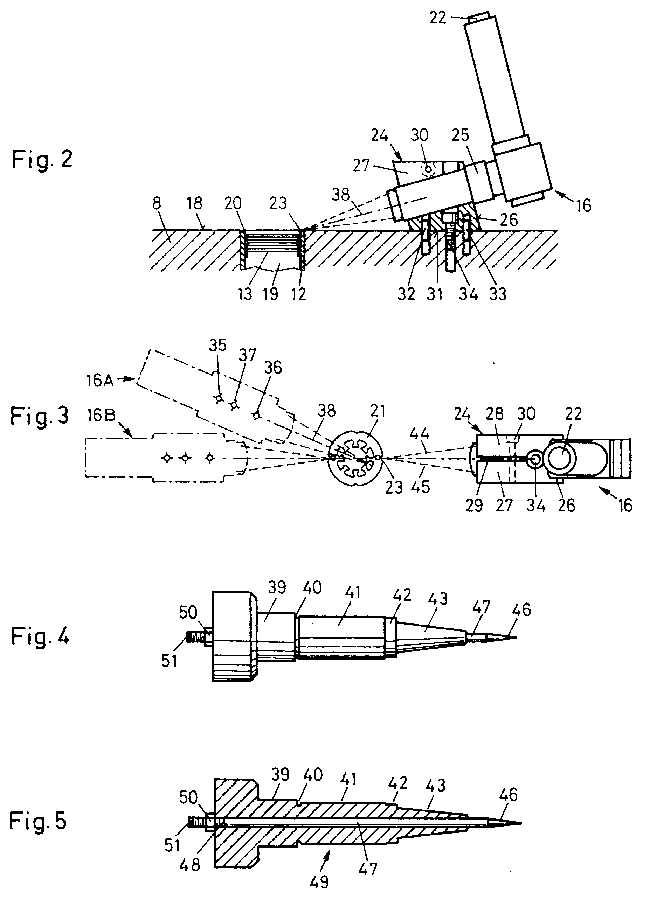

Damit ergibt sich nun folglich, dass die jeweilige Schweissstelle in der Matrize einer relativen Ortsveränderung unterworfen wird, somit grundsätzlich eine Neueinstellung mindestens der Fokussiereinrichtung 16 der Laser-Schweissanlage notwendig wird, und unabhängig davon an welcher Stelle sie in der Stanzpresse montiert ist. Durch die vorliegende Erfindung, von der eine beispielsweise Ausführung in den Fig. 2 und 3 dargestellt ist, wird eine Neueinstellung der Fokussiereinrichtung 16 nicht mehr notwendig.

Die Fig. 2 zeigt einen Schnitt durch einen Teil des Unterwerkzeuges 8 mit einer Matrize 12, die in einer Ausnehmung bzw. Durchgangsloch 19 derart eingesetzt ist, dass ihre Schnittkante 20 mit der Arbeitsfläche 18 fluchtet. Die Bremsanordnung 17 in der Matrize 12 ist beispielsweise ein Abschnitt mit einem durch irgendwelche Vorkehrung geringfügig verkleinerten Durchmesser. In der Matrize 12 ist ein Blechpaket 13 aus einer Anzahl miteinander verschweissten Einzelbleche gezeichnet.

Gemäss der Aufsicht nach Fig. 3 werden Statorbleche 21 gestanzt und zu Paketen zusammengeschweisst. Insbesondere ist ersichtlich, dass drei Fokussiereinrichtungen 16, 16A, 16B vorhanden sind, so dass die jeweiligen Bleche an drei Stellen miteinander verschweisst werden. Von diesen ist dasjenige, das der Darstellung nach Fig. 2 entspricht, mit ausgezogenen Linien, die weiteren zwei 16A, 16B strichliniert angedeutet.

Die Fokussiereinrichtungen sind über ein jeweils bei 22 angeschlossenes Glasfaserkabel mit einer gemeinsamen Laserstrahlquelle verbunden.

Solche Fokussiereinrichtungen sind allgemein bekannt und müssen somit nicht näher erläutert werden.

Im weiteren wird nun die Ausführung lediglich unter Bezugnahme auf die Fokussiereinrichtung 16 beschrieben. Die Fokussiereinrichtung 16 weist eine vorgegebene Brennweite und einen vorgegebenen Fokussierpunkt auf, der die (bzw. eine) Schweissstelle 23 zweier Bleche 21 bestimmt. Die Fokussiereinrichtung 16 ist dazu in einem Tragblock 24 eingesetzt und weist einen Bund 25 auf, über welchem sie an einer Seite 26 des Tragblockes 24 anliegt. Diese als Führungsfläche für die Fokussiereinrichtung 16 wirkende Seite 26 verläuft genau senkrecht zur optischen Achse 38 der Fokussiereinrichtung 16. Der Tragblock 24 ist derart genau bearbeitet und an einer Stelle, die einen derart genau bestimmten Abstand von der Schweissstelle 23 hat, mit derart genauen Verbindungsmitteln mit dem Körper des Unterwerkzeuges 8 verbunden, dass die durch die Optik der Fokussiereinrichtung 16 bestimmte Schweissstelle genau eingehalten ist. Die Genauigkeit liegt im Bereich von 1/100 mm. Eine entsprechende Genauigkeit liegt auch bei der Auflagefläche des Bundes 25 der Fokussiereinrichtung auf der Seite 26 des Tragblockes 24 vor.

Der Tragblock 24 ist grundsätzlich ein klammerförmiger Bauteil, der zwei Wangen 27, 28 aufweist, welche das Durchgangsloch zur tragenden Aufnahme der Fokussiereinrichtung 16 umgeben. Oben sind die zwei Wangen 27, 28 durch einen Schlitz 29 voneinander getrennt und durch einen Schraubbolzen 30 miteinander verbunden. Durch das Anziehen des Schraubbolzens 30 wird die Fokussiereinrichtung 16 im Tragblock 24 festgeklemmt.

Die Arbeitsfläche 18 des Körpers 8 des Unterwerkzeuges wirkt als Positionierfläche für den Tragblock 24, und diese Positionierfläche fluchtet mit der Schnittkante 20 der Matrize 12, die im Körper des Unterwerkzeuges 8 eingesetzt ist. Die untere Seite der Tragblockes 24, über welche er auf der Arbeitsfläche 18 ruht, wirkt als Führungsfläche 31, weil diese mindestens die Höhenstellung der im Tragblock 24 eingesetzten Fokussiereinrichtung 16 festlegt. Der Ort und die Stellung der Fokussiereinrichtung 16 im Tragblock 24 bestimmen unter anderem die Schweissstelle 23 bei der Matrize 12.

Der horizontale Abstand des Tragblockes 24 von der Schweissstelle 23, und somit insbesondere der Seite 26 des Tragblockes 24 (entlang der Arbeits-, bzw. Positionierfläche 18 gesehen) ist durch zwei Positionierstifte 32, 33 festgelegt, die in Bohrungen im Tragblock 24 und im Körper des Unterwerkzeuges 8 eingesetzt sind. Der Tragblock 24 selbst ist mittels einem Schraubbolzen 34 mit dem Körper des Unterwerkzeuges 8 verbunden. Die Positionierstifte 32, 33 mit ihren Längsmittelachsen 35, 36 und der Schraubbolzen 34 mit seiner Längsmittelachse 37 (aus Gründen der Klarheit bei der Fokussiereinrichtung 16A in Fig. 3 eingezeichnet) sind miteinander in Linie ausgerichtet, d.h. sie bestimmen eine Ebene, in welcher die optische Achse 38 der Fokussiereinrichtung 16 enthalten ist. Dadurch kann der Tragblock 24 äusserst schmal gebaut werden, so dass es möglich ist, auf einem eng begrenzten Raum mehrere, auf dieselbe Matrize 12 wirkende Fokussiereinrichtungen 16 der Laser-Schweissanlage zu montieren, so dass jeweils zwei Bleche im Blechpaket 13 an mehreren Stellen gleichzeitig miteinander verschweisst werden können.

Zu bemerken ist, dass bei der Seite 26 des Tragblockes 24 eine modifizierte Ausbildung vorhanden sein kann. Es könnte bei der genannten Seite eine mit einem Aussengewinde ausgerüstete Scheibe im Tragblock 24 eingeschraubt sein, welche zur genauen Einstellung des Abstandes der somit verstellbaren Seite 26 von der Schweissstelle 23 in den Tragblock 24 weiter eingeschraubt, bzw. herausgeschraubt werden, und in der dann korrekten Stellung arretiert werden kann.

Zur Kontrolle, ob die Stellung des Tragblockes 24 mindestens beim erstmaligen Montieren korrekt ist, und ob der Laserstrahl nicht etwa auf Werkzeugteile und nicht zu schweissende Werkstückteile bei und insbesondere vor der Schweissstelle auftreffen kann, dient ein Prüfwerkzeug, das in den Figuren 4 und 5 gezeigt ist, das als Prüfdorn bezeichnet werden kann.

Das Prüfwerkzeug weist einen Hauptkörper mit einem ersten Abschnitt 39 auf, welcher dem Bund 25 des Fokussierwerkzeuges 16 entspricht. Genau bearbeitet ist vorerst die Schulter 40, welche auf der Auflagefläche des Bundes 25 des Fokussierwerkzeuges 16 auf der die Führungsfläche bildenden Seite 26 des Tragblockes 24 aufliegt. An dieser Schulter 40 schliesst ein zylinderförmiger Abschnitt 41 an, dessen Durchmesser und Länge genau dem Durchmesser und der Länge des im Tragblock 24 gehaltenen Abschnittes der Fokussiereinrichtung 16 entspricht. Ebenso entsprechend ist der nachfolgende, kurze zylinderförmige Abschnitt 42.

Ein wichtiger Abschnitt ist der am Abschnitt 42 anschliessende kegelförmig zusammenlaufende Abschnitt 43. Seine Mantelfläche entspricht nämlich der kegelförmigen Hüllfläche des aus der Fokussiereinrichtung 16 austretenden Strahlenbündels der Laserstrahlen, welche Hüllfläche insbesondere in der Fig. 3 mit den Bezugsziffern 44 und 45 angedeutet ist.

Der Hauptkörper des Prüfwerkzeuges ist weiter von einem Stift 47 mit einem Spitzenabschnitt 46 axial durchsetzt. Die Mantelfläche dieses Spitzenabschnittes 46 entspricht weiter der Hüllfläche des Strahlenbündels.

Der Stift 47 weist ein Aussengewinde 48 auf, mittels welchem er im Hauptkörper 49 eingeschraubt ist. Weiter ist der Stift 47 mittels der Mutter 50 relativ zum Hauptkörper 49 arretiert.

Zum erstmaligen Einstellen wird der Stift 47 mittels einem in dem Schlitz 51 eingesetzten Schraubenzieher derart verstellt, dass der Abstand zwischen der Schulter 40 und seiner vorderen Spitze genau dem Abstand zwischen der Schweissstelle 23 in der Matrize 12 und der als Führungsfläche dienenden Seite 26 des Tragblockes 24 entspricht und darauf durch Anziehen der Mutter 50 arretiert. Die Genauigkeit des eingestellten Abstandes liegt in einem Bereich von wenigen 1/100 mm.

Das derart eingestellte Messwerkzeug wird nun anstelle der Fokussiereinrichtung 16 in den Tragblock 24 eingesetzt und durch Anziehen des Schraubbolzens 30 festgeklemmt. Die Spitze des Stiftes 47 liegt dann genau im Fokussierpunkt, also der Schweissstelle bei der Matrize 12.

Eine wichtige Rolle bei dieser Prüfung spielen nun die Mantelflächen des kegelförmigen Abschnittes 43 und des Spitzenabschnittes 46. Diese Mantelflächen dürfen auf kein Hindernis auftreffen. Ein solches Hindernis, z.B. irgend ein Werkstückteil, Werkzeugteil oder Befestigungsteil am Unterwerkzeug 8, würde das Strahlenbündel z.B. teilweise abdecken, könnte von diesem in einer beschädigenden Weise erhitzt werden, könnte das Strahlenbündel teilweise ablenken. Weiter, wie es aus der Fig. 3 hervorgeht, kreuzen sich die drei Strahlenbündel nicht, sie können einander nicht gegenseitig beeinflussen, und auch diese Anordnung der Strahlenbündel lässt sich mit dem Messwerkzeug genau überprüfen.

Nachdem die Ueberprüfung durchgeführt worden ist, kann die Fokussiereinrichtung 16, bzw. können die Fokussiereinrichtungen 16, 16A, 16B in den betreffenden Tragblock 24 eingesetzt, mit der Laserquelle 14 optisch verbunden und die Stanzpresse in Betrieb gesetzt werden.

Wenn das Nachschärfen der Schnittkante 20 der Matrize 12 (bzw. aller Schnittkanten im Unterwerkzeug) durchgeführt werden muss, wird das Unterwerkzeug ausgebaut und, bei schon entfernter Fokussiereinrichtung 16, der Tragblock 24 durch Lösen des Schraubbolzens 34 vom Körper des Unterwerkzeuges 8 entfernt.

Danach kann nun die Arbeitsfläche 18 in bekannter Weise abgeschliffen werden, um die verschiedenen Schnittkanten nachzuschärfen. Entscheidend ist jetzt, dass beim Abschleifen nicht nur der Bereich des Körpers des Unterwerkzeuges 8 bei der Matrize 12, sondern gleichzeitig und im selben Mass auch der Bereich der Positionierfläche des Körpers des Unterwerkzeuges 8, die die Höhenstellung des Tragblockes 24 und folglich der Fokussiereinrichtung 16 bestimmt, abgeschliffen wird. Somit kann nach der genannten Bearbeitung der Tragblock 24 ohne weiteres wieder mit dem Körper des Unterwerkzeuges 8 verbunden werden und die Fokussiereinrichtung 16 kann wieder montiert werden. Eine zeitraubende und aufwendige Neuausrichtung insbesondere des Tragblockes 24 auf die Schweissstelle, die sich relativ nicht zur Positionierfläche verschoben hat, fällt somit weg.

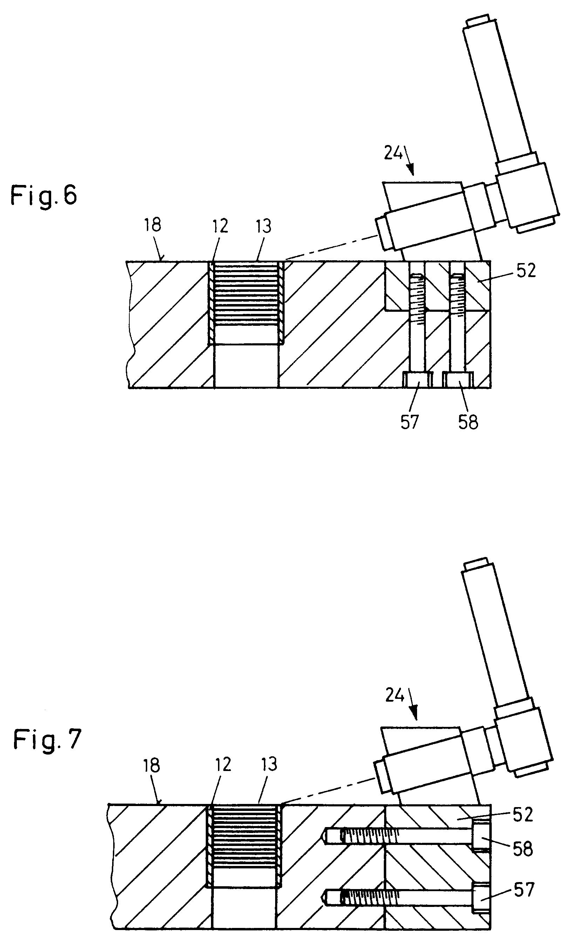

Die Figuren 6 und 7 zeigen Varianten, bei denen der Tragblock 24 der Fokussiereinrichtung 16 nicht unmittelbar mit dem Werkzeugkörper 8 verbunden ist. Bei diesen Varianten ist der Tragblock 24 auf einem separaten Tragteil 52 angeordnet. Dieser blockförmige Tragteil 52 kann beispielsweise gemäss der Ausführung nach Figur 6 bei einem Randbereich des Körpers des Unterwerkzeuges 8 in demselben eingesetzt oder gemäss der Ausführung nach Figur 7 seitlich mit dem Körper des Unterwerkzeuges 8 verbunden sein. Die Verbindung kann mit den beispielsweise eingezeichneten Schraubbolzen 57, 58 erfolgen. Wo und wie der Tragteil 52 mit dem Körper des Unterwerkzeuges 8 verbunden ist, ist nicht entscheidend. Entscheidend ist, dass die freie Oberfläche, auf welcher der Tragblock 24 der Fokussiereinrichtung 16 mit seiner Führungsfläche 31 ruht, mit der Arbeitsfläche 18 des Körpers des Unterwerkzeuges 8 fluchtet und beim Nachschleifen der Arbeitsfläche 18 mit abgeschliffen wird.

Beim Schweissen entstehen dauernd zu entfernende Schweissdämpfe und Schweissrauch. Dazu ist es bekannt, im Werkzeug Bohrungen anzufertigen.

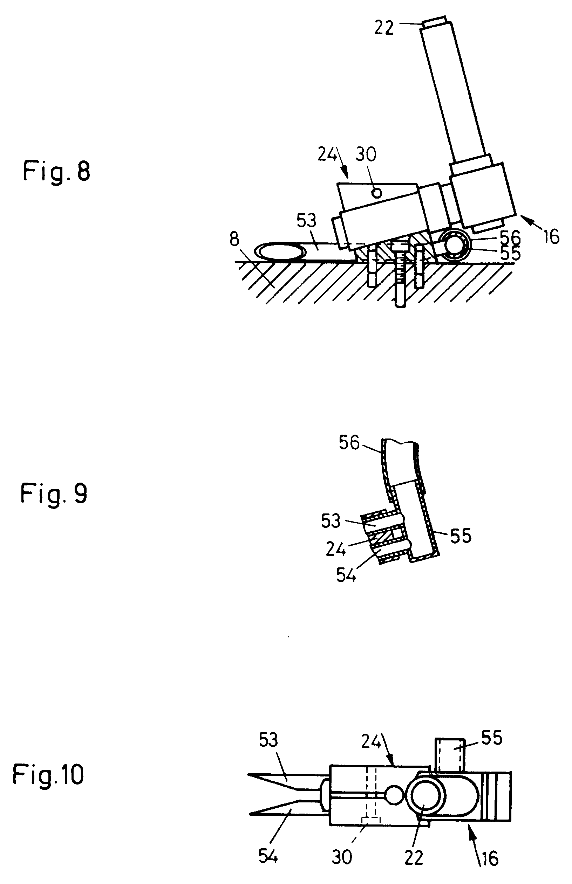

Die Figuren 8-10 zeigen eine vorteilhafte Variante, bei welcher die genannten Bohrungen im Werkzeug entfallen. Der Tragblock 24 ist mit Absaugkanälen 53, 54 ausgerüstet. Diese sind Durchbohrungen im Tragblock 24 gebildet, in denen bei der Seite der Schweissstelle bei ihren Enden abgeschrägte Rohrstücke eingesetzt sind. Bei der entgegengesetzten Seite sind die Durchbohrungen mit einem starren Sammelkanal 55 in Verbindung. An diesem Sammelkanal 55 schliesst eine möglicherweise flexible Absaugleitung 56 an. Die gezeigte Ausführung ist äusserst wirksam und vorteilhaft, weil die Rohrstücke derart bemessen und geformt sein können, dass sie abhängig von der vorgegebenen Schweissstelle so nahe wie möglich zum Ort der entstehenden Schweissdämpfe geführt werden können. Weiter müssen im Falle von mehreren Fokussiereinrichtungen 16, z.B. gemäss der Anordnung nach Figur 3 nicht sämtliche dort vorhandenen Tragblöcke 24 mit Absaugkanälen ausgerüstet sein. Auch können einzelne Tragblöcke 24 mit nur einem Absaugkanal ausgerüstet sein, so dass das Absaugen der Schweissdämpfe den örtlichen Gegebenheiten entsprechend optimiert werden kann.

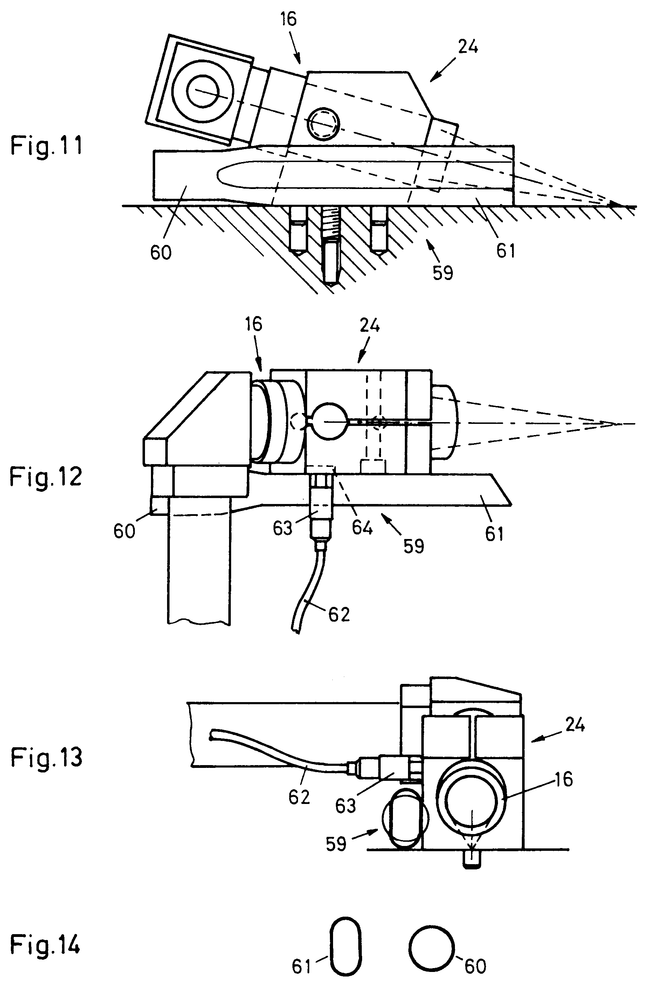

In den Figuren 11-14 ist eine weitere Variante gezeigt. Die Fokussiereinrichtung 16, die wie auch bei allen vorgehenden Ausführungen vibrationsfest ist, ein gasdichtes, kalibriertes Gehäuse zur genau positionierten Aufnahme im Tragblock 24 aufweist, ist mit einem einzigen Absaugkanal 59 ausgerüstet. Der Absaugkanal 59 verläuft entlang dem Gehäuse und weist einen ersten Abschnitt 61 auf, der eine etwas langgestreckte Querschnittsform ähnlich einer breiten Schlitzdüse aufweist, an welchem Abschnitt 61 ein Abschnitt 62 mit einer kreisrunden Querschnittsform anschliesst. Im Vergleich mit der Ausführung mit den zwei Absaugkanälen 53, 54 weist der Absaugkanal 59 eine grössere Querschnittsfläche auf, nimmt jedoch keinen wesentlich grösseren Raum ein.

In den Figuren 11-13 ist zudem eine Sicherheitsanordnung dargestellt, die aus Gründen der Uebersichtlichkeit bei den vorgängigen Ausführungen nicht eingezeichnet ist.

Offensichtlich beinhaltet eine Laservorrichtung eine erhebliche Verletzungsgefahr für Menschen, da die Laserstrahlen eine hohe Energie beinhalten. Es muss folglich sichergestellt werden, dass Laserstrahlen nur dann abgegeben werden, wenn die Fokussiereinrichtung beim Werkzeug eingebaut ist und die Laserquelle bei einem Entfernen der damit verbundenen Fokussiereinrichtungen ausgeschaltet ist.

Vom (nicht gezeigten) Steuergerät der Laserquelle führt ein Kabel 62 zur Fokussiereinrichtung, d.h. zu jeder Fokussiereinrichtung. In diesem Kabel 62 sind zwei elektrische Leiter zur Bildung eines Stromkreises angeordnet, der nur wenn der Kreis geschlossen ist ein Einschalten der Laserquelle erlaubt. Das Kabel 62 endet bei einem Stecker 63, der zum Verbinden mit dem Gehäuse oder Tragblock der Fokussiereinrichtung eingesteckt und geschraubt werden muss. Dabei wird der Stecker 63 mit einer Steckbuchse 64 (Fig. 12) verbunden, in der eine elektrische Brücke vorhanden ist, mittels welcher der Stromkreis geschlossen wird und das Einschalten der Laserquelle erlaubt.

## Patentansprüche

1. Werkzeug mit mindestens einem Tragblock (24) und einer Fokussiereinrichtung (16) für eine mit mindestens einer Laser-Schweissanlage bestückten Stanzpresse, welcher Tragblock (24) zum geführten Tragen der Fokussiereinrichtung (16) ausgebildet ist und welche Fokussiereinrichtung (16) mit einer vorgegebenen Brennweite und einem vorgegebenen Fokussierpunkt ausgebildet ist, welches Werkzeug einen Körper (8) mit einer Arbeitsfläche (18) aufweist, bei welcher mindestens eine Ausnehmung (19) für eine darin eingesetzte Matrize (12) angeordnet ist, deren Schnittkante (20) mit einem Flächenabschnitt der Arbeitsfläche des Körpers (8) fluchtet, welcher Tragblock (24) derart ausgebildet und angeordnet ist, dass ein jeweiliger aus der im Tragblock (24) eingesetzten Fokussiereinrichtung (16) austretender Laserstrahl gegen eine festgelegte Stelle (23) eines Werkstückes fokussiert ist, um bei einem vorhandenen Werkstück Schweissungen durchzuführen, und welcher Tragblock (24) mindestens eine Führungsfläche (31) für dessen Positionierung relativ zur Fokussierstelle (23) aufweist, dadurch gekennzeichnet, dass der Tragblock (24) mit seiner Führungsfläche (31) auf einer Positionierfläche eines Traggliedes (8; 52) ruht, welche Positionierfläche dazu dient, die Höhenstellung der Fokussiereinrichtung (16) relativ zum mit der Schnittkante (20) fluchtenden Flächenabschnitt des Körpers (8) festzulegen und mit diesem Flächenabschnitt fluchtet.

2. Werkzeug nach Anspruch 1, gekennzeichnet durch eine zwischen dem Tragglied (8;52) und dem Tragblock (24) wirkende Positioniereinrichtung (32, 33), welche den parallel zur Positionierfläche verlaufenden Abstand zwischen dem Tragblock (24) und der jeweiligen Fokussierstelle (23) unveränderbar festlegt.

3. Werkzeug nach Anspruch 2, dadurch gekennzeichnet, dass die Positioniereinrichtung mindestens zwei Positionierstifte (32, 33) aufweist, die in Ausnehmungen im Tragblock (24) und im Tragglied (8;52) derart eingesetzt sind, dass ihre Längsmittelachsen (35, 36) eine Ebene bestimmen, in welcher die optische Achse (38) der auf die Fokussierstelle (23) ausgerichteten Fokussiereinrichtung (16) enthalten ist.

4. Werkzeug nach Anspruch 3, dadurch gekennzeichnet, dass der Tragblock (24) eine Aufnahme aufweist, in welcher die Fokussiereinrichtung (16) geführt getragen ist und eine senkrecht zur optischen Achse (38) der getragenen Fokussiereinrichtung (16) verlaufende weitere Führungsfläche (26) aufweist, dass die Fokussiereinrichtung (16) eine senkrecht zu ihrer optischen Achse (38) verlaufende Anschlagfläche aufweist, welche an der weiteren Führungsfläche (26) anliegt, wobei der Abstand zwischen der weiteren Führungsfläche (26) und der jeweiligen Fokussierstelle durch die Positioniereinrichtung festgelegt ist.

5. Werkzeug nach einem der vorangehenden Ansprüche, dadurch gekennzeichnet, dass das Tragglied durch den Körper (8) gebildet ist.

6. Werkzeug nach einem der Ansprüche 1-4, dadurch gekennzeichnet, dass das Tragglied ein getrennter, mit dem Körper (8) verbundener Tragteil (52) ist.

7. Werkzeug nach einem der vorangehende Ansprüche, gekennzeichnet durch mindestens einen Absaugkanal (53, 54; 59) zum Absaugen von Schweissrauch und Schweissdämpfen, welcher den Tragblock (24) durchsetzt oder neben demselben angeordnet ist.

## Claims

1. Tool with at least one supporting block (24) and a focusing device (16) for a punch press equipped with a laser-welding apparatus, which supporting block (24) is designed for a guided supporting of the focusing device (16) and which focusing device (16) is designed with a predetermined focal length and a predetermined focal point, which tool includes a body (8) with a working surface (18) at which at least one recess (19) for a bottom die (12) placed therein is located of which the cutting edge (20) is aligned with a surface portion of the working surface of the body (8), which supporting block (24) is designed and located in such a manner that a respective laser beam exiting the focusing device (16) set in the supporting block (24) is focused towards a set location (23) of a workpiece in order to perform weldings at a workpiece located thereat, and which supporting block (24) includes at least one guiding surface (31) for its positioning relative to the location (23) of the focusing, characterized in that the supporting block (24) rests with its guiding surface (31) on a positioning surface of a supporting member (8; 52), which positioning surface is serves for a setting of the hight position of the focusing device (16) relative to the surface portion of the body (8) which is aligned with the cutting edge (20), and is aligned with this surface portion.

2. Tool according to claim 1, characterized by a positioning device (32, 33) acting between the supporting member (8; 52) and the supporting block (24), which sets the distance between the supporting block (24) and the respective location (23) of the focusing extending parallel to the positioning surface in an unchangeable manner.

3. Tool according to claim 2, characterized in that the positioning device comprises at least two positioning pins (32, 33) which are inserted in recesses in the supporting block (24) and in the supporting member (8; 52) in such a manner that their longitudinal center axes (35, 36) determine a plane containing the optical axis (38) of the focusing device (16) aligned with the location (23) of the focusing.

4. Tool according to claim 3, characterized in that the supporting block comprises a receptacle in which the focusing device (16) is supported in a guided manner and comprises a further guiding surface (26) extending perpendicularly to the optical axis (38) of the supported focusing device, in that the focusing device comprises an abutment surface extending perpendicularly to its optical axis (38) which rests on the further guiding surface (26), whereby the distance between the further guiding surface (26) and the respective location of the focusing is determined by the positioning device.

5. Tool according to one of the preceding claims, characterized in that the supporting member is formed by the body (8).

6. Tool according to one of the claims 1-4, characterized in that the supporting member is a separate supporting part (52) mounted to the body (8).

7. Tool according to one of the preceding claims, characterized by at least one suction channel (53,54; 59) for a drawing off of welding smoke and welding vapors which extends through the supporting block (24) or is located aside of same.

## Revendications

1. Outil, avec au moins un socle (24) et un dispositif de focalisation (16) pour une presse d'étampage comportant au moins un dispositif de soudure par laser, le socle (24) étant agencé pour supporter le dispositif de focalisation (16) de manière mobile, ce dispositif de focalisation (16) ayant une longueur focale et un foyer prédéterminés, l'outil comportant un corps (8) avec une surface de travail (18) dans laquelle est ménagée au moins une cavité (19) prévue pour contenir une matrice (11) et dont l'arête de coupe (20) affleure une région de la surface de travail du corps (8), le socle (24) étant agencé et disposé de façon à ce qu'un faisceau laser issu du dispositif de focalisation (16) monté dans le socle (24) soit focalisé en un emplacement fixe (23) d'une pièce à usiner pour réaliser des soudures sur la pièce à usiner placée à cet endroit, le socle (24) comportant au moins une surface de guidage (31) pour le positionner par rapport à l'emplacement (23) de la soudure, caractérisé en ce que le socle (24) repose par sa surface de guidage (31) sur une surface de positionnement d'un support (8; 52), la surface de positionnement servant à déterminer le réglage en hauteur du dispositif de focalisation (16) par rapport à la portion de surface du corps (8) affleurant l'arête de coupe (20).

2. Outil selon la revendication 1, caractérisé par un dispositif de positionnement (32, 33) intercalé entre le support (8; 52) et le socle (24) et déterminant de façon invariable la distance parallèle à la surface de positionnement entre le socle (24) et l'emplacement fixe (23).

3. Outil selon la revendication 2, caractérisé en ce que le dispositif de positionnement comporte au moins deux tiges de positionnement (32, 33) engagées dans des cavités du socle (24) et du support (8; 52) de façon à ce que leurs axes longitudinaux (35, 36) déterminent un plan dans lequel se trouve l'axe optique (38) du dispositif de focalisation (16) orienté vers l'emplacement fixe (23).

4. Outil selon la revendication 3, caractérisé en ce que le socle (24) comporte un guide guidant et maintenant le dispositif de focalisation (16) ainsi qu'une seconde surface de guidage (26) orthogonale à l'axe optique (38) du dispositif de focalisation (16) maintenu dans le guide, que le dispositif de focalisation (16) comporte une surface d'appui orthogonale à son axe optique (38) et appliquée contre la seconde surface de guidage (26), la distance entre celle-ci et l'emplacement fixe étant déterminée par le dispositif de positionnement.

5. Outil selon une des revendications précédentes, caractérisé en ce que le support est formé par le corps (8).

6. Outil selon une des revendications 1 à 4, caractérisé en ce que le support consiste en un élément séparé (52) monté sur le corps (8).

7. Outil selon une des revendications précédentes, caractérisé par au moins un canal d'aspiration (53, 54; 59) pour l'évacuation des fumés et des gaz provoqués par la soudure, ce canal traversant le socle (24) ou étant agencé à côté de celui-ci.
